# EUROPEAN PATENT SPECIFICATION

(11) **EP 3 900 858 B1**
(45) Date of publication and mention of the grant of the patent: **27.11.2024**
(21) Application number: 21170153.7
(22) Date of filing: 23.04.2021
(51) Int. Cl.: B22F 10/366, B33Y 10/00, B33Y 50/02, B22F 10/28, B22F 10/38, B22F 10/36

(54) **METHOD FOR PERFORMING SELECTIVE LASER MELTING OF METAL POWDER**
VERFAHREN ZUR DURCHFÜHRUNG DES SELEKTIVEN LASERSCHMELZENS VON METALLPULVER
MÉTHODE POUR RÉALISER LA FUSION SÉLECTIVE PAR LASER D'UNE POUDRE MÉTALLIQUE

(30) Priority: 24.04.2020 IT 202000008989
(43) Date of publication of application: 27.10.2021
(73) Proprietor: PROMOTION SPA, 36077 Altavilla Vicentina (IT); PX Services SA, 2304 La Chaux-de-Fonds (CH)
(72) Inventor: AMOROSO, Tiziano, 2300 La Chaux-de-Fonds (CH); MEYER, Edouard Marc, 2000 Neuchatel (CH); BLATTER, Andreas, 2056 Dombresson (CH)
(74) Representative: Lissandrini, Marco

(56) References cited:
- EP-A1- 3 495 078
- US-A1- 2005 142 024
- US-A1- 2015 017 055
- US-A1- 2017 326 646
- CHEN XIANGDONG ET AL: "Investigation on mechanism of surface tension on morphology of melt track in selective laser melting processing", APPLIED PHYSICS A MATERIALS SCIENCE & PROCESSING, SPRINGER BERLIN HEIDELBERG, BERLIN/HEIDELBERG, vol. 124, no. 10, 10 September 2018 (2018-09-10), pages 1 - 7, XP036587879, ISSN: 0947-8396, [retrieved on 20180910], DOI: 10.1007/S00339-018-2102-7
- EMILIE HØRDUM VALENTE ET AL: "Effect of Scanning Strategy During Selective Laser Melting on Surface Topography, Porosity, and Microstructure of Additively Manufactured Ti-6Al-4V", APPLIED SCIENCES, vol. 9, no. 24, 17 December 2019 (2019-12-17), pages 5554, XP055743429, DOI: 10.3390/app9245554

## Description

### TECHNICAL FIELD

The present invention relates to a method for performing a selective laser melting of metal powder to manufacture an object.

In particular, the invention is part of the additive production or three-dimensional printing sector and relates to a laser metal fusion type processing for the production of metal products from metal powder.

### PRIOR ART

Traditional processing processes, such as turning or milling, do not allow the production in series of geometrically complex components with very fine inner channels or cavities.

By virtue of technological progress, new processing techniques based on additive production have been developed in recent years, also known as three-dimensional printing.

Three-dimensional printing allows to obtain components of high stability and reduced weight, for example, for the construction of custom-made implants and prostheses.

Currently, additive processing techniques have also been introduced in the goldsmith sector, for example laser metal fusion ("LMF"), for the production of objects precisely and with a reduction in the waste of generally precious and expensive material.

Patent documents EP3495078, US2015/017055, US2005/142024, US2017/326646 and, in addition, the scientific articles Chen Xiangdong et al. ,"Investigation on mechanism of surface tension on morphology of melt track in selective laser melting processing", Applied Physics A, Vol. 124, No. 10, p. 1-7 (2018), XP036587879 and Emilie Hordum Valente et al., "Effect of Scanning Strategy During Selective Laser Melting on Surface Topography, Porosity, and Microstructure of Additively Manufactured Ti-6AI-4V", Applied Sciences, Vol. 9, No. 24, 5554, XP055743429 report some examples of additive processing according to the state of the art.

In particular, the LMF technique is an additive processing process in which a component is created from metal powder, layer after layer. In detail, the laser is configured to melt the metal powder into successive layers of material, completing specific paths according to construction parameters set through structural design software.

The production of a jewellery component essentially includes two working steps for each layer: a first step, in which a peripheral portion of the component is made and, subsequently, a second step in which a filling portion of the component is made, i.e., the portion comprised inside the peripheral portion already made.

With regard to making the peripheral portion, but in a substantially similar manner also for the filling portion, the LMF technique envisages performing, in sequence from the outside to the inside or vice versa, a succession of laser melting of the powder according to the more or less simple and substantially concentric paths. Therefore, the powder is thereby melted and solidified, section by section, so as to form a single metal body.

However, such prior art has a series of drawbacks which the present invention aims to overcome.

Firstly, the performance of close processing, both spatially and temporally, involves the accumulation of heat and can generate undesired and/or uncontrollable areas of over-melting, resulting in the formation of irregularities and porosity in the object in production.

In addition, the high intensity of the laser's work together with the high temperatures generates a partial movement and removal of the unmelted powder from the areas adjacent to the path traced by the laser beam, with a consequent reduction in the homogeneity with which the powder itself is distributed and, therefore, with a reduction in the final quality of the product. These drawbacks are greatly accentuated if powder obtained from a highly reflective metal must be used at the frequencies of the laser beam used (usually the so-called red laser), such as the red gold frequently used in jewellery.

The presence of inhomogeneity, irregularity and porosity at the peripheral portion of the component is reflected in mechanical and aesthetic problems, as the component does not have the desired surface conformation.

In addition, the presence of a defective, irregular and porous surface conformation requires performing further pore covering and/or surface smoothing processes for a perfect mirror polishing. All these additional steps entail a significant increase in production costs due to the costs of added raw material (for example for closing the porosities), raw material lost during processing (for example during sanding) and the cost of labour for the performance of the aforementioned steps.

### SUMMARY

In this context, the technical task of the present invention is to propose a method for performing a selective laser melting of metal powder which obviates the drawbacks of the prior art as mentioned above.

In particular, an object of the present invention is to provide a method for performing a selective laser melting of metal powder which enables objects with a low level of porosity to be obtained.

Another object of the present invention is to provide a method for performing a selective laser melting of metal powder which allows working with the same laser source and, at the same time, which allows obtaining the same results in terms of volumetric density and low porosity level, regardless of the type of metal powder used.

The stated technical task and specified objects are substantially achieved by a method for performing a selective laser melting of metal powder to manufacture an object, which comprises the technical features disclosed in the independent claim. The dependent claims correspond to further advantageous aspects of the invention.

It should be highlighted that this summary introduces, in simplified form, a selection of concepts which will be further elaborated in the detailed description given below.

The invention relates to a method for performing a selective laser melting of metal powder to manufacture an object as defined in the appended claims.

In particular, the selective laser melting method comprises the following steps:
- scanning a metal powder bed by means of a laser beam configured to complete a plurality of melting paths so as to build a corresponding plurality of confinement sections, each of which has a predefined width. In addition, the confinement sections delimit between them a confinement space having a predefined width;
- scanning a metal powder bed by means of a laser beam configured to complete at least one melting path within the confinement space so as to selectively melt the material present in the confinement space in order to build a corresponding intermediate section having a predefined width.

In other words, according to a preferred aspect of the invention, the method according to the invention allows to manufacture an object by building confinement sections (also called "odd tracks") spaced apart from each other for the formation of one or more confinement areas (also called "channels") in which, depending on various factors, such as the size of the laser spot and the thermal conductivity values of the material, there may be partially or incompletely molten metal powder and/or unmelted metal powder and, subsequently, by creating intermediate sections (also called "even tracks") in equal number to the previously defined confinement areas, so as to melt any unmelted metal powder, if present, and/or the incompletely melted metal powder and, therefore, weld the two adjacent confinement sections together.

Advantageously, the building of the so-called "channels" allows to confine any unmelted metal powder in a limited area so that the melting wave generated by the laser beam scanning along the aforementioned "channel" pervades the interstices between the powder granules.

Consequently, the scanning of the laser beam along the "channels" allows the metal grains to melt so as to form at least a portion of the object with a high and homogeneous density of melted metal.

### BRIEF DESCRIPTION OF THE DRAWINGS

Further features and advantages of the present invention will become more apparent from the following indicative and therefore non-limiting description depicted in the drawings, in which:
- figure 1a illustrates an enlarged view of the surface of an object built by means of a method of selective laser melting known to the state of the art;
- figure 1b schematically illustrates the sequence of scans for making at least a portion of the object of figure 1a in accordance with a method known to the state of the art;
- figure 2a illustrates an enlarged view of the surface of an object made by means of a method according to the invention;
- figure 2b schematically illustrates a sequence of scans for making at least the portion of the object of figure 2a;
- figure 3a schematically illustrates an aspect of the method according to the invention;
- figure 3b schematically illustrates another aspect of the method according to the invention;
- figures 4a-4f schematically illustrate a first application example of the sequence of steps of the method according to the invention;
- figures 5a-5f schematically illustrate a second application example of the sequence of steps of the method according to the invention;
- figures 6a-6f schematically illustrate a third application example of the sequence of steps of the method according to the invention;
- figure 7a schematically illustrates a fourth application example of the method according to the invention to manufacture an object;
- figure 7b schematically illustrates a fifth application example of the method according to the invention to manufacture an object.

The drawings serve solely to illustrate embodiments of the invention with the aim of better clarifying, in combination with the description, the inventive principles on which the invention is based.

### DETAILED DESCRIPTION

In the present description and the accompanying figures, a metal object has been generically referred to with the number 10.

The other numerical references refer to technical features of the invention which, barring indications otherwise or evident structural incompatibilities, the person skilled in the art will know how to apply to all the variant embodiments described.

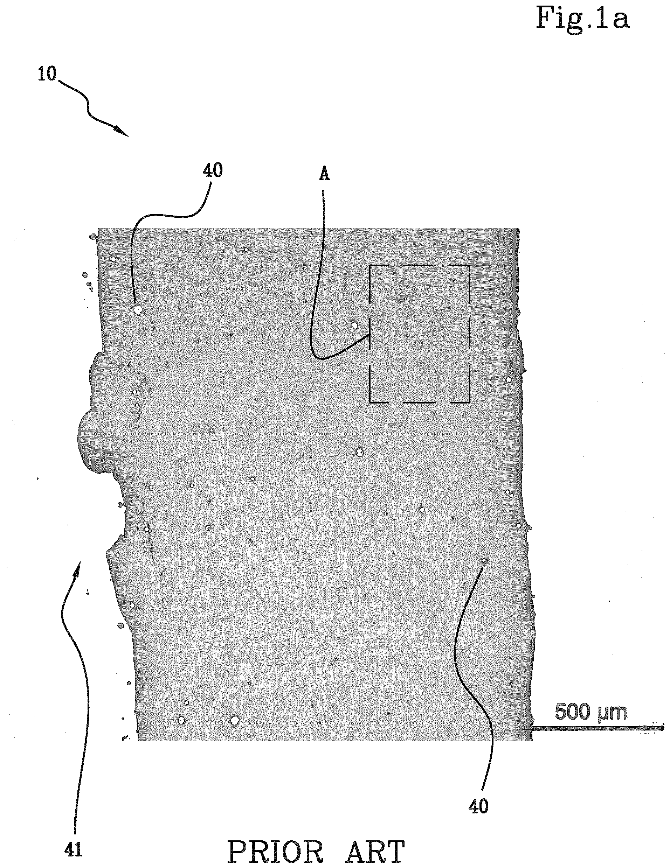

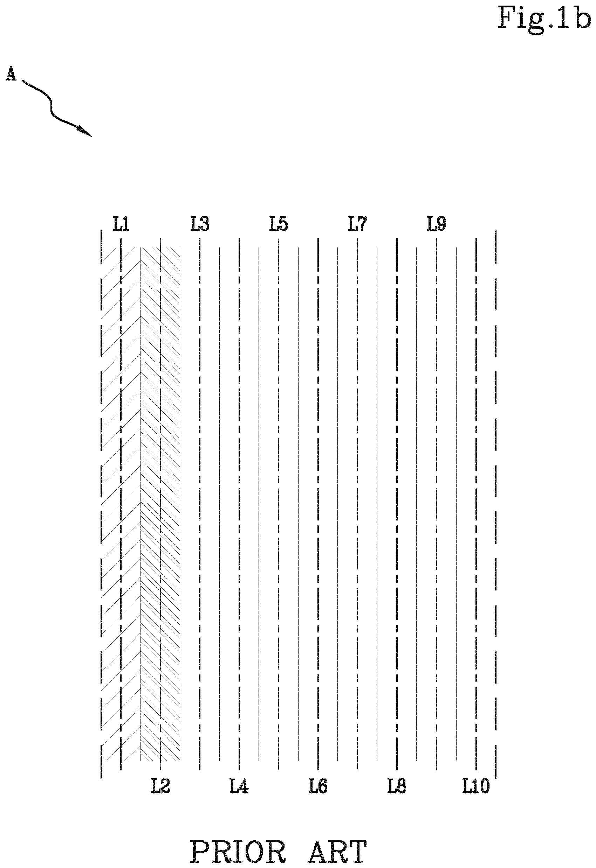

Figures 1a, 1b relate to the prior art and depict, respectively, the surface of an object 10 made with a known selective laser melting technique and the schematization of the scans performed.

In particular, figure 1a depicts a portion of an object 10 made from a bed of gold powder. More precisely, the object 10 depicted in figure 1a is made from a bed of "red gold" powder (5N gold).

Figure 1b, on the other hand, depicts the sequence of processes performed to produce the aforementioned object 10 and, more precisely, depicts the area "A" highlighted in figure 1a.

In accordance with the prior art illustrated in figure 1b, the production of an object 10 by selective laser melting involves performing, on a bed of metal powder, a plurality of consecutive and adjacent scans so as to form a respective plurality of melted metal tracks L1, L2,... L10. Such tracks L1, L2,... L10 are depicted for simplicity as linear strips.

In other words, therefore, the prior art includes performing the plurality of laser scans in sequence with each other, so that each track is performed adjacent to that previously completed. In the example illustrated in figure 1b, the tracks L1, L2 ... L10 are performed from left to right so as to progressively expand the surface extension of the melted portion of the object 10 for the manufacture thereof.

In other words, in accordance with the known art, the laser beam is configured to perform a scan along one of the predetermined tracks, for example the track L1, and then be moved laterally (repeatedly as a function of need, i.e., the surface extension of metal powder to be melted) in a perpendicular direction so as to be able to execute a new scan along a new track, for example the track L2, adjacent to the previous one.

However, due to the high operating temperatures of the laser beam, the performance of a scan near an adjacent track just performed, and not yet completely solidified, causes a partial re-melting of the latter track resulting in the formation of gas pockets (for example, inert gases such as argon or nitrogen normally used to create a controlled atmosphere during the processing) which reduce the local density of the object 10 and, therefore, the disadvantageous formation of porosity 40, clearly visible in figure 1a.

In fact, the porosities have a double drawback:
- they form surface irregularities which lead to surface defects which must be subsequently eliminated by further processing, resulting in an inevitable increase in production costs;
- they reduce structural strength.

In addition, the porosity is particularly accentuated in the case where the known technique is applied to metal powders obtained from highly reflective materials, such as red gold, bronze and other copper alloys.

Normally, in fact, for selective laser melting techniques a common laser beam configured to emit at a wavelength of 1073 nm is used. However, the aforementioned highly reflective metal materials tend to reflect a considerable part of the laser intensity radiated as a function of the surface morphology and granule size. It follows that part of the metal powder melts partially and/or incompletely, resulting in the formation of agglomerations of unmelted and/or only partially melted powder. Therefore, the local density of the metal is not homogeneous.

Therefore, it is sometimes customary to configure the laser source to operate at higher powers than those normally used. However, this results in an over-melting of the metal powder, i.e., its melting at excessive temperatures which form gas bubbles which, in turn, result in an increase in porosity during solidification and, therefore, a decrease in local density (figure 1a).

The present invention relates to a method for performing a selective laser melting of metal powder to manufacture an object 10 and, in particular, at least one edge portion 20 thereof.

In particular, the invention is part of the additive production or three-dimensional printing sector and relates to a laser metal fusion type processing for the production of metal products from metal powder.

In particular, the invention aims to propose a method for selective laser melting capable of manufacturing objects 10 with a low level of porosity.

In particular, the method comprises the following steps:
- scanning a metal powder bed by means of a laser beam configured to complete a plurality of melting paths D so as to build a corresponding plurality of confinement sections 1,3,5,7, each of which has a predefined width. In addition, the confinement sections 1,3,5,7 delimit between them a confinement space C having a predefined width;
- scanning a metal powder bed by means of a laser beam configured to complete at least one melting path P within the confinement space C so as to selectively melt the material present in the same confinement space C in order to build a corresponding intermediate section 2,4,6 which has a predefined width thereof.

Advantageously, the aforementioned method for selective laser melting of a metal powder layer allows to increase the local density of metal material of an object 10 and, consequently, to reduce the porosity to values close to 0% so as to obtain surfaces and/or volumes having a homogeneous density, free of fractures and free of aesthetic defects which would require further processing to be eliminated.

Even more advantageously, compared to the prior art, the method according to the invention allows to obtain the aforementioned results also with the processing of metal powder obtained from highly reflective metal materials such as red gold, bronze and other copper alloys, and/or other materials having high thermal conductivity values, such as aluminium.

More precisely, the method in question allows melting such metal powders using a laser beam configured to emit at a wavelength of 1073 nm, i.e., the wavelength normally used in selective laser melting techniques for additive printing.

Advantageously, the method according to the invention allows to decide the order in which to perform the laser scans so as to allow the treated material to disperse the heat generated by the laser beam and, therefore, improve the mechanical strength of the finished object 10, as over-melting phenomena are avoided and a high and homogeneous local density inside the object 10 (low level of porosity) is obtained.

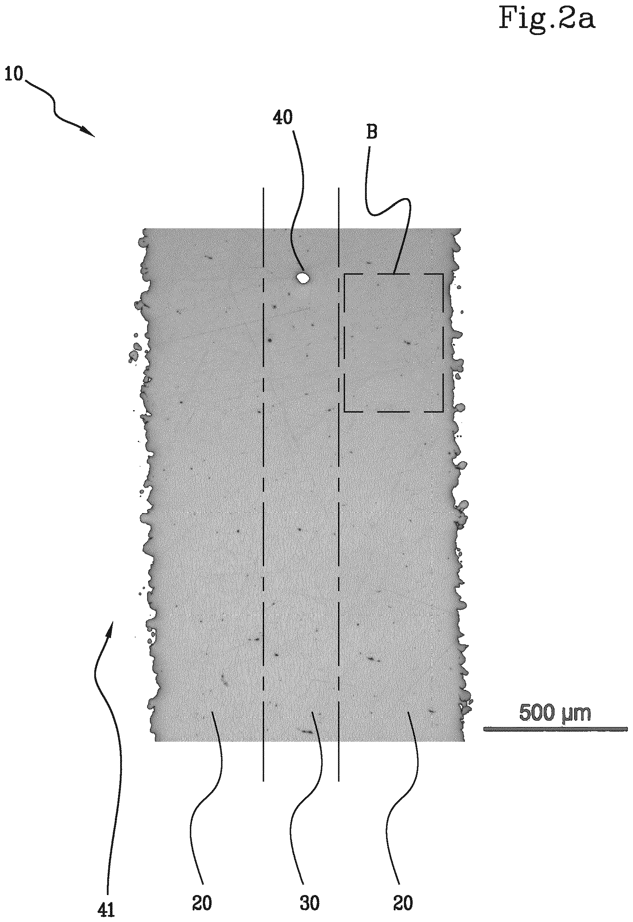

In the field of selective laser melting, the formation of the over-melting phenomenon can induce mechanical-structural problems within the finished object, as it can cause the formation of an excessive porosity which, in addition to determining an aesthetic problem, also causes a structural problem of the finished object 10 due to the presence of internal cracks. The method according to the invention, being proposed as an alternative and innovative technique for the selective laser melting of metal powder, is able to obtain at least the following advantages (visible in figure 2a and better explained below):
- reduction, to values close to 0%, of the porosity of an object 10;
- increase and homogenization of the density of metal material of an object 10;
- increase in the mechanical strength of the object 10 due to the lack of internal cracks;
- processing of highly reflective metal materials even with "standard" laser sources.

Figure 2a depicts a scan of an object 10 made from a bed of gold powder, similar to figure 1a, so that a comparison can be made between such images. More precisely, figure 2a shows an object 10 in which the two edge portions 20 are made with the method according to the invention, while the central body portion 30 is made with the laser melting method according to the prior art also used for the manufacture of the object 10 illustrated in figure 1a.

Visually comparing the edge portions 20 with the body portion 30, it can be seen that there are only any porosities similar to those present in figure 1a in the body portion 30, while the edge portions 20 are of extremely reduced porosity and, therefore, with a local density close to 100%.

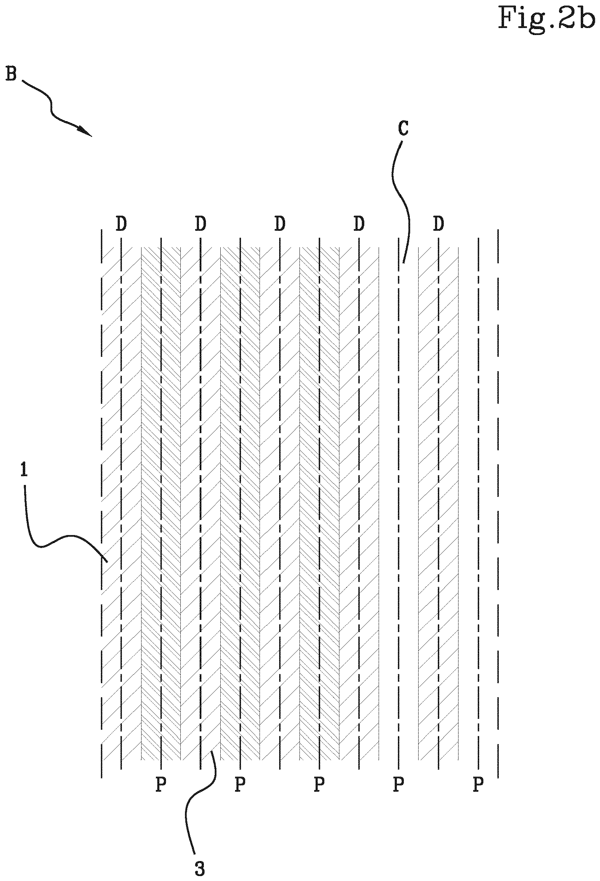

Figure 2b depicts the sequence of processing performed to produce the object 10 and, more precisely, for the manufacture of its area "B" highlighted in figure 2a relating to an edge portion 20 made with the method according to the invention.

Preferably, the method object of the present description comprises a scanning step for building a plurality of confinement sections 1,3,5,7 and another scanning step for building a plurality of intermediate sections 2,4,6, each of which is performed in a respective intermediate confinement space C between two adjacent confinement sections 1,3,5,7.

Consequently, each intermediate section 2,4,6 being built in a respective confinement space C, must be performed after building at least the pair of confinement sections 1,3,5,7 which delimit the aforementioned confinement space C.

The building of the intermediate sections 2,4,6 after building at least part of the plurality of confinement sections 1,3,5,7 causes the advantageous formation of a generated melting wave which pervades the interstices between the granules of unmelted metal powder, if present, and contained in the confinement space C. Thereby, the method is advantageously able to increase the local density of melted metal within the object 10 and, therefore, to reduce the porosity of the same object 10 to values close to 0%.

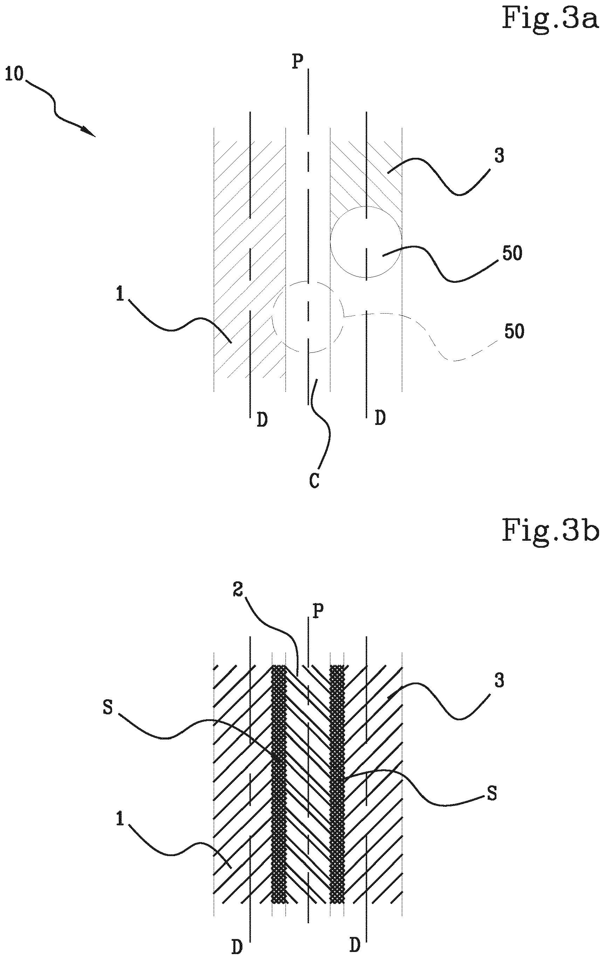

Figure 3a illustrates a preferred aspect of the invention, in which a first confinement section 1 has already been built and a second confinement section 3 is partially built by the laser beam (depicted by the element 50 which, specifically, represents the laser spot 50). The confinement sections 1, 3 (also referred to as "odd tracks") are built spaced apart along the respective melting paths D so as to define the confinement space C of incompletely melted metal powder. The intermediate section 2 will be built after the confinement section 3 along the respective melting path P, which extends along the confinement space C, so as to melt the confined metal powder and weld the adjacent confinement sections 1, 3 together. The laser spot 50 is illustrated at the confinement space C, with dashed line, to indicate its preferred positioning during the melting of the intermediate section 2.

According to an aspect of the invention, the width of the intermediate section 2,4,6 is at least one quarter of the width of the confinement space C delimited between two adjacent confinement sections 1,3,5,7.

According to another aspect of the invention, the width of the intermediate section 2,4,6 is at least equal to half the width of the confinement space C delimited between the two adjacent confinement sections 1,3,5,7. According to a further aspect of the invention, the width of the intermediate section 2,4,6 is at least equal to three quarters of the width of the confinement space C delimited between the two adjacent confinement sections 1,3,5,7.

During the building of each confinement section 1,3,5,7 due to thermal conduction and thermal inertia phenomena, the laser processing also induces a partial melting of any unmelted metal powder contained within the confinement area C. Therefore, even if the width of the intermediate section 2,4,6 is less than the width of the confinement area C, the same intermediate section 2,4,6 is able to weld to adjacent confinement sections 1,3,5,7 to form a single piece of the object 10.

According to an aspect of the invention, the width of the intermediate section 2,4,6 is at least equal to the width of the confinement space C delimited between two adjacent confinement sections 1,3,5,7.

According to a preferred aspect of the invention visible in figure 3b, the width of the intermediate section 2,4,6 is greater than the width of the confinement space C delimited between two adjacent confinement sections 1,3,5,7, so that the same intermediate section 2,4,6 at least partially overlaps at least one of the two confinement sections 1,3,5,7, preferably both. Figure 3b shows the overlapping areas S.

According to an embodiment, the laser beam is configured to perform scans at a wavelength value equal to 1073 nm and its laser spot 50 has a diameter of 30 microns. Consequently, the width of the confinement sections 1,3,5,7 (and of the intermediate sections 2,4,6) will be at least equal to 30 microns. In fact, it is possible that the actual width of each section is slightly greater, as part of the metal powder adjacent to the section melts due to the thermal conductivity of the metal powder and the thermal inertia resulting from the melting produced by the laser beam. Consequently, as can be seen in figure 1a (prior art) and figure 2a, "burrs" 41 are formed along each section.

The distance between two adjacent confinement sections 1,3,5,7, i.e., the transverse displacement which the laser beam must perform between building two different melting paths D, is variable as a function of need and/or depends on the type of metal powder to be melted. In particular, such a distance indicates the displacement that the centre of the laser spot 50 must perform between one melting path and the next.

Due to the width of the laser spot 50 and the fact that the distance of its displacement is measured with respect to its centre, the confinement space C has a lower effective width than that of the set displacement. As illustrated in figures 3a and 3b, it results in an overlap of the laser spot 50 apart from the confinement sections 1,3,5,7 during the building of the intermediate section 2,4,6 and the formation of the overlapping areas S.

Preferably, the working intensities of the laser beam are between values of a few Watts and values exceeding one hundred Watts.

For example, for the laser scanning of gold metal powder (figure 2a) or bronze, the laser beam is configured to perform scans with a minimum intensity between 20 Watts and 80 Watts and a maximum intensity between 100 Watts and 160 Watts, while the displacement distance of the laser spot 50, and thus the width of the confinement space C, is variable between about 30 microns and 100 microns.

According to a preferred aspect of the invention, the scanning step for building at least one intermediate section 2,4,6 comprises the sub-step of scanning the metal powder so as to build a plurality of intermediate sections 2,4,6 each in a respective confinement space C delimited between two confinement sections 1,3,5,7 or between a previously built confinement section 1,3,5,7 and an intermediate section 2,4,6.

In other words, preferably, the method according to the invention comprises a laser scanning step for building a plurality of confinement sections 1,3,5,7 and a laser scanning step for building a plurality of intermediate sections 2,4,6.

According to an aspect of the invention, the plurality of confinement sections 1,3,5,7 and at least one intermediate section 2,4,6 have the same width. Preferably, all the confinement sections 1,3,5,7 and all the intermediate sections 2,4,6 have the same width since they are built with the same laser beam.

According to another aspect of the invention, the plurality of confinement sections 1,3,5,7 and at least one intermediate section 2,4,6 are parallel to each other.

Preferably, all the confinement sections 1,3,5,7 and all the intermediate sections 2,4,6 are parallel to each other.

Even more preferably, all the confinement sections 1,3,5,7 and all the intermediate sections 2,4,6 are built along the respective melting directions D, P substantially linear and parallel to each other. Therefore, the laser spot 50 can be moved along the aforementioned melting directions D, P for building the respective section and, moreover, can be moved along a direction perpendicular to the melting paths D, P between one scan and the next.

In other words, therefore, between building two successive melting sections (two confinement sections 1,3,5,7 or two intermediate sections 2,4,6 and one and one) the laser spot is moved along a direction perpendicular to the respective melting directions P, D.

According to an aspect of the invention, each confinement section 1,3,5,7 is built equidistant from the others.

According to another aspect of the invention, the plurality of confinement sections 1,3,5,7 is built in sequence.

According to an aspect of the invention, the scanning step for building at least one intermediate section 2,4,6 builds a plurality of intermediate sections 2,4,6 equidistant from each other.

According to another aspect of the invention, the scanning step for building at least one intermediate section 2,4,6 builds a plurality of intermediate sections 2,4,6 in sequence.

According to a preferred aspect of the invention, each confinement section 1,3,5,7 and each intermediate section 2,4,6 are built along the respective melting path D, P traced according to an advancement direction of the laser beam opposite an advancement direction traced for building the confinement section 1,3,5,7 or the intermediate section 2,4,6 above.

According to the invention, the method comprises a step of adjusting the intensity of the laser beam between at least a first intensity value corresponding to the scanning step for building a plurality of confinement sections 1,3,5,7 and a second intensity value corresponding to the scanning step for building at least one intermediate section 2,4,6. According to the invention, the first intensity value corresponding to the scanning step for building a plurality of confinement sections 1,3,5,7 is less than the second intensity value corresponding to the scanning step for building at least one intermediate section 2,4,6.

For example, if the melting of gold or bronze metal powder is performed, it is preferable to configure the laser beam to build the confinement sections 1,3,5,7 at an intensity between 20 Watts and 80 Watts and to build the intermediate sections 2,4,6 at an intensity between 100 Watts and 160 Watts.

Advantageously, the variation of the intensity between building the confinement sections 1,3,5,7 and the intermediate sections 2,4,6 allows to obtain several positive effects.

Such positive effects are mainly achieved in the case of gold metal powder and, more generally, in the case of processing powder obtained from a metal having high reflectivity and/or high thermal conductivity.

Performing a melting of the metal powder at relatively low laser beam intensity values allows to build the confinement sections 1,3,5,7 and, at the same time, prevent the laser pulse and the sudden increase in local thermal gradient (which can generate convective motions at the powder) from generating the displacement of any unmelted metal powder (which, consequently, remains substantially homogeneously distributed and confined in the relative confinement spaces C).

During the building of the intermediate sections 2,4,6, the performance of a melting of the metal powder at intensity values of the laser beam greater than the previous case allows to limit the movement of the melted metal powder (and, therefore, in a substantial fluid and/or liquid state) in the confinement space C in order to increase the local density and reduce the porosity which could occur along the edges of the previously built confinement sections 1,3,5,7.

In other words, therefore, according to the present embodiment, the method in accordance with the invention allows to obtain an object 10 with a high density level and a low degree of porosity through the exploitation of a geometric factor, i.e., the confinement of any metal powder to be subsequently melted, if present, and or of the poor partially melted metal, and an energy factor, i.e., the melting of the metal powder through the setting of different operating intensities of the laser beam between building the confinement sections 1,3,5,7 and the intermediate sections 2,4,6.

In addition, the increase in the intensity of the laser beam during the building of the intermediate sections 2, 4, 6 allows to obtain a partial remelting of the previously built confinement sections 1,3,5,7 with a lower intensity. Thereby, any powder grains of the confinement sections 1,3,5,7 which are not perfectly melted (due to the "low" intensity of the laser beam) can be melted again (avoiding any over-melting phenomenon) in order to obtain an object 10 with a high-density level and a low degree of porosity.

According to a further aspect of the invention, it is preferable to configure the laser beam to build a first confinement section 1 at a lower intensity value than that at which it is configured to build the subsequent confinement sections 3,5,7. Thereby, having set the intensity of the laser beam substantially to the minimum value to obtain the melting of the metal powder, the formation of the "burrs" 41 is reduced to the minimum and consequently the accuracy with which the first confinement section 1 is built is increased.

In addition, according to the same aspect of the invention, it is preferable to configure the laser beam to build a first intermediate section 2 at an intensity value greater than that at which it is configured to build the subsequent intermediate sections 4,6. Therefore, it is thereby possible to increase the density of melted metal of the first previously built confinement section 1, by permeation of the melted metal during the building of the intermediate section 2 within the possible porosities present in the same first confinement section 1.

According to an aspect of the invention, the method comprises a step of adjusting the scanning speed of the laser beam as a function of the intensity value of the laser beam such that an increase in intensity corresponds to a reduction in the scanning speed and vice versa according to a ratio between a factor 1.5 and a factor 15.

For example, in the case of gold or bronze metal powder or of other metals, the confinement sections 1,3,5,7 are built with a laser beam intensity between 20 Watts and 80 Watts and with a laser beam advancement speed along the respective melting direction D equal to about 3,000 millimetres per second. Building intermediate sections 2,4,6, on the other hand, includes configuring the laser beam to operate at an intensity between 100 Watts and 160 Watts and at an advancement speed of about 200 millimetres per second.

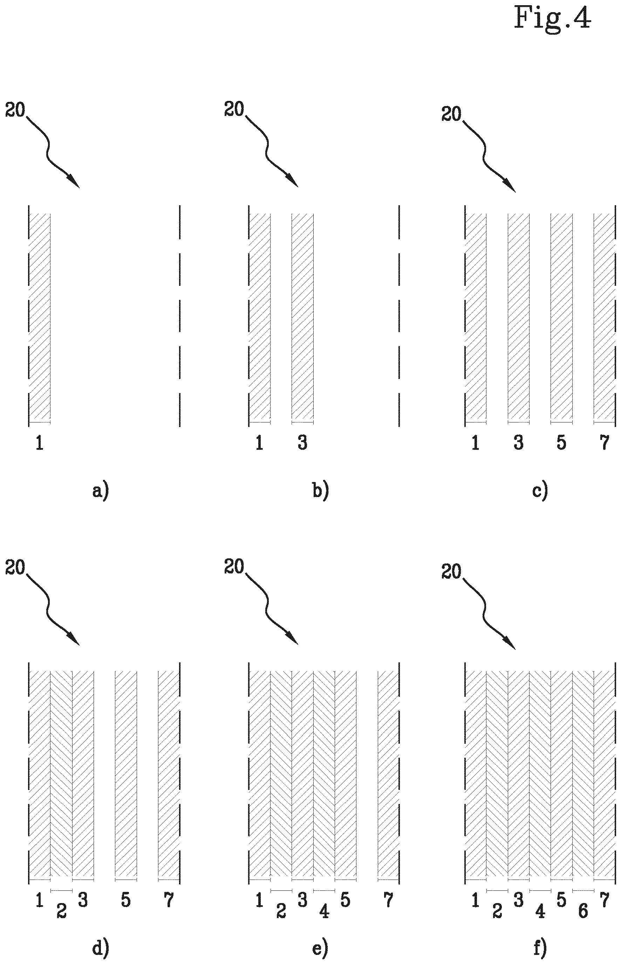

Figures 4a-4f illustrate, schematically, a first application example of the method according to the invention.

According to such an embodiment example, the method includes building all the confinement sections 1,3,5,7 (figures 4a-4c) and, only after their completion, all the intermediate sections 2,4,6 (figures 4d-4f) will be built. Preferably, the confinement sections 1,3,5,7 are built parallel and equidistant from each other. Even more preferably, the confinement sections 1,3,5,7 are built in sequence along the transverse direction of displacement of the laser beam between one melting path D and the next (figures 4a, 4b, 4c).

Preferably, the intermediate sections 2,4,6 are built parallel and equidistant from each other along the respective confinement spaces C. Even more preferably, the intermediate sections 2,4,6 are built in sequence along the transverse direction of displacement of the laser beam between one melting path P and the next (figures 4d, 4e, 4f).

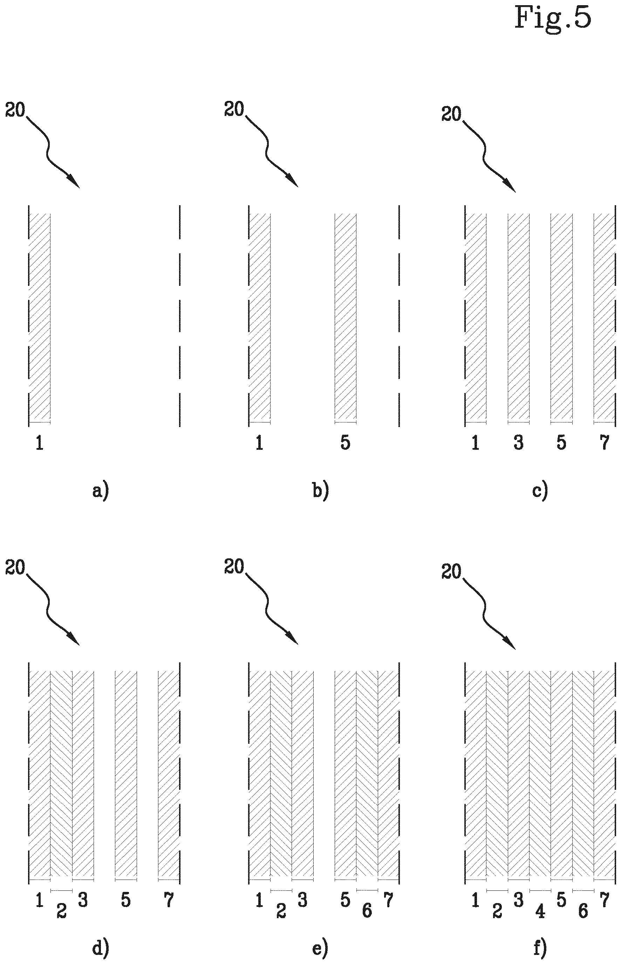

Figures 5a-5f illustrate, schematically, a second application example of the method according to the invention.

According to such an embodiment example, the method includes building all the confinement sections 1,3,5,7 (figures 5a-5c) and, only after their completion, all the intermediate sections 2,4,6 (figures 5d-5f) will be built. Preferably, the confinement sections 1,3,5,7 are built parallel and equidistant from each other. However, unlike the above example, the confinement sections 1,3,5,7 are not built in sequence, but alternately. For example, in accordance with figures 5a-5c, first the confinement section 1 is built, then the confinement section 5, then the confinement section 3 and then the confinement section 7.

Preferably, the intermediate sections 2,4,6 are built parallel and equidistant from each other along the respective confinement spaces C.

However, unlike the above example, the intermediate sections 2,4,6 are not built in sequence, but alternately. For example, in accordance with figures 5d-5f, the intermediate section 2 is built first, then the intermediate section 4 and finally the intermediate section 6.

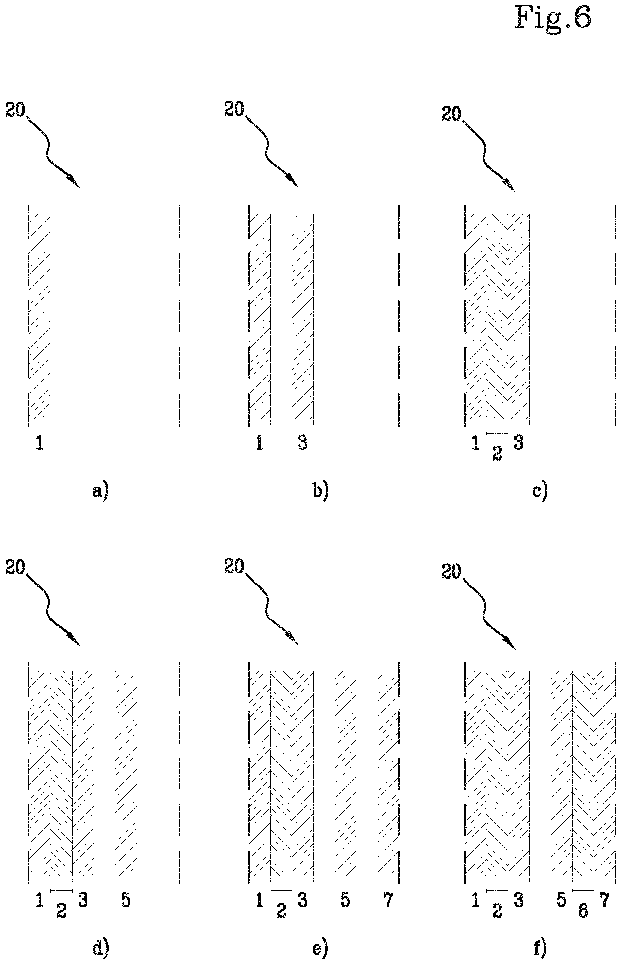

Figures 6a-6f schematically illustrate a third application example of the method according to the invention.

According to such an embodiment example, the method includes building a part of the plurality of confinement sections 1,3,5,7 (figures 6a, 6b), followed by at least one intermediate section 2,4,6 (figures 6c), preferably a number of intermediate sections equal to the previously formed confinement spaces C and, finally, the previously performed steps are repeated a sufficient number of times for the manufacture of the object 10 (figures 6d-6f). Preferably, the confinement sections 1,3,5,7 are built parallel and equidistant from each other.

Preferably, the intermediate sections 2,4,6 are built parallel and equidistant from each other along the respective confinement spaces C.

In other words, the aforementioned embodiment includes first building at least one pair of confinement sections 1,3 (figures 6a, 6b) which form a relative confinement space C and, therefore, an intermediate section 2 along the aforementioned confinement space C (figure 6c) to form a first portion of the metal object 10. Subsequently, a second pair of confinement sections 5,7 (figures 6d, 6e) forming a relative confinement space C and, therefore, an intermediate section 6 along the aforementioned confinement space C (figure 6f) is built to form a second portion of the metal object 10. In addition, or as an alternative to what is shown in figure 6f, a further intermediate section 4 (not shown) can be built along the respective confinement space C between the confinement sections 3,5.

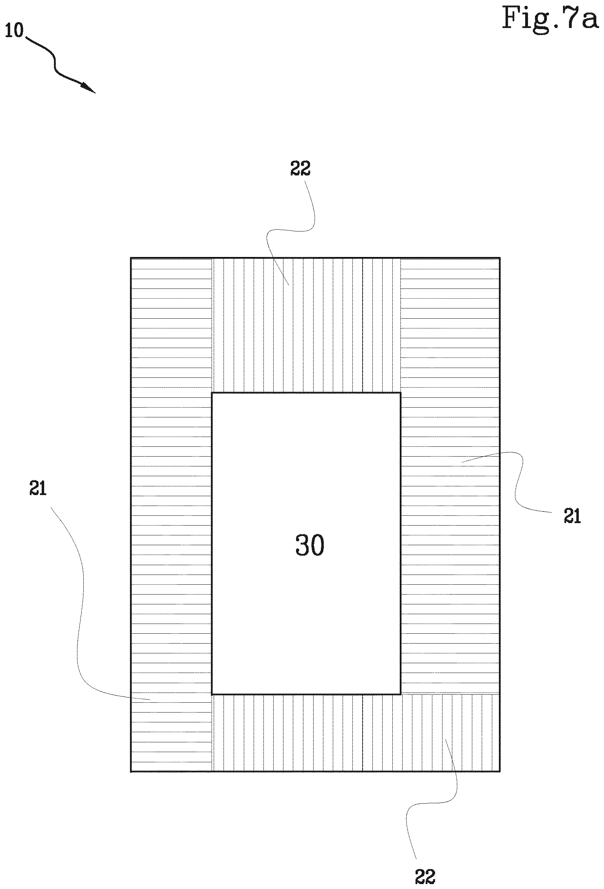

Figure 7a schematically illustrates a fourth application example of the method according to the invention for the manufacture of an object 10. More precisely, figure 7a illustrates an object 10 in which an edge portion 20 thereof is built with the method according to the invention.

In particular, referring mainly but not exclusively to figure 7a, the method comprises the following steps:
- identifying an area of the powder bed on which at least one layer intended to define an edge portion 20 of the finished object 10 will be built. In particular, the edge portion 20 occupies a predefined thickness of the finished object 10 and, preferably, circumscribes a remaining body portion 30 of the same object 10;
- by means of laser scanning, building of a plurality of confinement sections 1,3,5,7 in the area of the powder bed corresponding to the edge portion 20;
- by means of laser scanning, building at least one intermediate section 2,4,6 in the area of the powder bed corresponding to the edge portion 20;
- by means of laser scanning, performing a so-called selective laser melting for filling in the area of the powder bed corresponding to the body portion 30.

Advantageously, in the finished object 10, the edge portion 20 has a lower porosity than the body portion 30.

For example, in the goldsmiths' sector, it is essential to obtain objects 10 provided with at least one outer surface, i.e., directly visible to a user, free of surface defects and, therefore, free of any porosities which cause aesthetic, economic problems (due to the need to perform further processing for their removal) and structural weakness.

Otherwise, the body portion 30 of the object 10, i.e., a central portion or a portion not directly visible, does not necessarily require the absence of porosity for an aesthetic purpose and, therefore, such body portion 30 can also be made with the known, least performing techniques of selective laser melting (with reference to the maximum local density achieved and the resulting minimum level of porosity obtained).

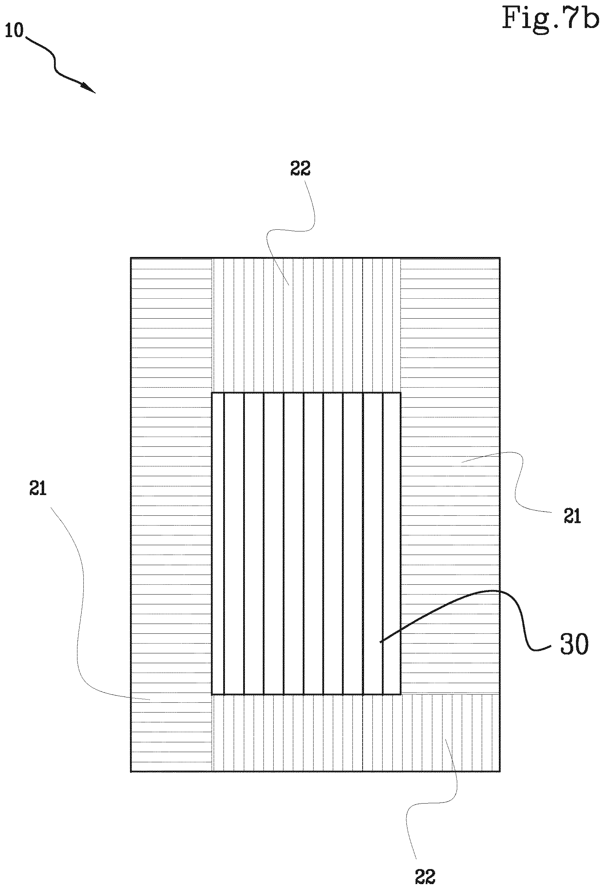

In any case, as illustrated in figure 7b, the body portion 30 can also be made with the method according to the invention, similarly to the edge portion 20, so as to reduce porosity and increase mechanical strength for structural purposes.

With reference to figures 7a and 7b, the performance of the method according to the invention allows to make the edge portion 20 in a fractal manner.

That is, the edge portion 20 is advantageously subdivided into distinct parts which are made independently of each other, on the same powder bed, by building confinement sections 1,3,5,7 and relative intermediate sections 2,4,6, along respective melting paths D, P oriented differently from each other.

For example, in figures 7a and 7b, the edge portion 20 has been divided into four parts made independently of each other. The parts 21 have the same orientation of melting paths D, P between them, but different with respect to the parts 22 (which, in turn, are made with sections built along melting paths D, P with the same orientation).

## Claims

1. A method for performing a selective laser melting of metal powder to manufacture an object (10), comprising the following steps:
- scanning a metal powder bed by means of a laser beam configured to complete a plurality of melting paths (1,3,5,7) so as to build a plurality of confinement sections (1,3,5,7), each having its own predefined width, said confinement sections (1,3,5,7) delimiting between them a confinement space (C) having a predefined width;
- scanning a metal powder bed by means of a laser beam configured to complete at least one melting path (2,4,6) within the confinement space (C) so as to selectively melt the material present in said confinement space (C) in order to build an intermediate section (2,4,6) having a predefined width
- **characterised in** adjusting the intensity of the laser beam between at least a first intensity value corresponding to the scanning step for building a plurality of confinement sections (1,3,5,7) and a second intensity value corresponding to the scanning step for building at least one intermediate section (2,4,6), wherein the first intensity value corresponding to the scanning step for building a plurality of confinement sections (1,3,5,7) is lower than the second intensity value corresponding to the scanning step for building at least one intermediate section (2,4,6).

2. The method according to claim 1, wherein the width of said intermediate section (2,4,6) is at least equal to a fourth of the width of the confinement space (C) delimited between two adjacent confinement sections (1,3,5,7).

3. The method according to claim 1 or 2, wherein the width of said intermediate section (2,4,6) is at least equal to half the width of the confinement space (C) delimited between two adjacent confinement sections (1,3,5,7).

4. The method according to any preceding claim, wherein the width of said intermediate section (2,4,6) is at least equal to three quarters of the width of the confinement space (C) delimited between two adjacent confinement sections (1,3,5,7).

5. The method according to any preceding claim, wherein the width of said intermediate section (2,4,6) is at least equal to the width of the confinement space (C) delimited between two adjacent confinement sections (1,3,5,7).

6. The method according to any preceding claim, wherein the width of an intermediate section (2,4,6) is greater than the width of the confinement space (C) delimited between two adjacent confinement sections (1,3,5,7), so that said intermediate section (2,4,6) at least partly overlaps at least one of said two confinement sections (1,3,5,7), preferably both.

7. The method according to any preceding claim, wherein said step of scanning to build at least one intermediate section (2,4,6) comprises the sub-step of scanning metal powder in order to build a plurality of intermediate sections (2,4,6), each in a respective confinement space (C) delimited between two confinement sections (1,3,5,7) or between one confinement section (1,3,5,7) and a previously completed intermediate section (2,4,6).

8. The method according to any preceding claim, wherein said plurality of confinement sections (1,3,5,7) and said at least one intermediate section (2,4,6) have the same width.

9. The method according to any preceding claim, wherein said plurality of confinement sections (1,3,5,7) and said at least one intermediate section (2,4,6) are parallel to one another.

10. The method according to any preceding claim, wherein each confinement section (1,3,5,7) is built equidistant from the others.

11. The method according to any preceding claim, wherein said plurality of confinement sections (1,3,5,7) are built in sequence.

12. The method according to any preceding claim, wherein the step of scanning to build at least one intermediate section (2,4,6) builds a plurality of intermediate sections (2,4,6) which are equidistant from one another.

13. The method according to any preceding claim, wherein the step of scanning to build at least one at least one intermediate section (2,4,6) builds a plurality of intermediate sections (2,4,6) in sequence.

14. The method according to any preceding claim, wherein each confinement section (1,3,5,7) and each intermediate section (2,4,6) are built along the respective melting path (D, P) traced according to an advancement direction of the laser beam which is opposite to an advancement direction traced for the building of the preceding confinement section (1,3,5,7) or intermediate section (2,4,6).

15. The method according to any one of the preceding claims, comprising the following steps:
- identifying an area of the powder bed on which at least one layer intended to define an edge portion (20) of the finished object (10) will be built, wherein said edge portion (20) occupies a predefined thickness of the object (10) and preferably circumscribes a remaining body portion (30) of the same object (10);
- by means of laser scanning, executing a plurality of confinement sections (1,3,5,7) in the area of the powder bed corresponding to the edge portion (20);
- by means of laser scanning, executing at least one intermediate section (2,4,6) in the area of the powder bed corresponding to the edge portion (20);
- by means of laser scanning, performing a so-called selective laser melting for filling in the area of the powder bed corresponding to the body portion (30),
so that, in the finished object (10) the edge portion (20) has a lower porosity than the body portion (30).

## Patentansprüche

1. Verfahren zur Durchführung eines selektiven Laserschmelzens von Metallpulver zur Herstellung eines Objekts (10), umfassend die folgenden Schritte:
- Abtasten eines Metallpulverbetts mittels eines Laserstrahls, der dazu ausgelegt ist, eine Vielzahl von Schmelzwegen (1,3,5,7) abzuschließen, um eine Vielzahl von Einschlusssektionen (1,3,5,7) zu bilden, von denen eine jede ihre eigene vordefinierte Breite aufweist, wobei die Einschlusssektionen (1,3,5,7) zwischen sich einen Einschlussraum (C) mit einer vordefinierten Breite begrenzen;
- Abtasten eines Metallpulverbetts mittels eines Laserstrahls, der dazu ausgelegt ist, mindestens einen Schmelzweg (2,4,6) innerhalb des Einschlussraums (C) abzuschließen, um das in dem Einschlussraum (C) vorhandene Material selektiv zu schmelzen, damit eine Zwischensektion (2,4,6) mit einer vordefinierten Breite gebildet wird,
**gekennzeichnet durch** Einstellen der Intensität des Laserstrahls zwischen mindestens einem ersten Intensitätswert, der dem Abtastschritt zum Bilden einer Vielzahl von Einschlusssektionen (1,3,5,7) entspricht, und einem zweiten Intensitätswert, der dem Abtastschritt zum Bilden mindestens einer Zwischensektion (2,4,6) entspricht, wobei der erste Intensitätswert, der dem Abtastschritt zum Bilden einer Vielzahl von Einschlusssektionen (1,3,5,7) entspricht, niedriger ist als der zweite Intensitätswert, der dem Abtastschritt zum Bilden mindestens einer Zwischensektion (2,4,6) entspricht.

2. Verfahren nach Anspruch 1, wobei die Breite der Zwischensektion (2,4,6) mindestens gleich einem Viertel der Breite des Einschlussraums (C) ist, der zwischen zwei benachbarten Einschlusssektionen (1,3,5,7) begrenzt ist.

3. Verfahren nach Anspruch 1 oder 2, wobei die Breite der Zwischensektion (2,4,6) mindestens gleich der Hälfte der Breite des Einschlussraums (C) ist, der zwischen zwei benachbarten Einschlusssektionen (1,3,5,7) begrenzt ist.

4. Verfahren nach einem der vorhergehenden Ansprüche, wobei die Breite der Zwischensektion (2,4,6) mindestens gleich drei Viertel der Breite des Einschlussraums (C) ist, der zwischen zwei benachbarten Einschlusssektionen (1,3,5,7) begrenzt ist.

5. Verfahren nach einem der vorhergehenden Ansprüche, wobei die Breite der Zwischensektion (2,4,6) mindestens gleich der Breite des Einschlussraums (C) ist, der zwischen zwei benachbarten Einschlusssektionen (1,3,5,7) begrenzt ist.

6. Verfahren nach einem der vorhergehenden Ansprüche, wobei die Breite einer Zwischensektion (2,4,6) größer ist als die Breite des Einschlussraums (C), der zwischen zwei benachbarten Einschlusssektionen (1,3,5,7) begrenzt ist, so dass die Zwischensektion (2,4,6) mindestens teilweise mindestens eine der zwei Einschlusssektion (1,3,5,7), vorzugsweise beide, überlappt.

7. Verfahren nach einem der vorhergehenden Ansprüche, wobei der Schritt zum Abtasten, um mindestens eine Zwischensektion (2,4,6) zu bilden, den Unterschritt zum Abtasten von Metallpulver umfasst, um eine Vielzahl von Zwischensektionen (2,4,6) zu bilden, die sich jeweils in einem jeweiligen Einschlussraum (C) befinden, der zwischen zwei Einschlusssektionen (1,3,5,7) oder zwischen einer Einschlusssektion (1,3,5,7) und einer zuvor abgeschlossenen Zwischensektion (2,4,6) begrenzt ist.

8. Verfahren nach einem der vorhergehenden Ansprüche, wobei die Vielzahl von Einschlusssektionen (1,3,5,7) und die mindestens eine Zwischensektion (2,4,6) die gleiche Breite aufweisen.

9. Verfahren nach einem der vorhergehenden Ansprüche, wobei die Vielzahl von Einschlusssektionen (1,3,5,7) und die mindestens eine Zwischensektion (2,4,6) parallel zueinander verlaufen.

10. Verfahren nach einem der vorhergehenden Ansprüche, wobei eine jede Einschlusssektion (1,3,5,7) äquidistant zu der anderen gebildet ist.

11. Verfahren nach einem der vorhergehenden Ansprüche, wobei die Vielzahl von Einschlusssektionen (1,3,5,7) nacheinander gebildet werden.

12. Verfahren nach einem der vorhergehenden Ansprüche, wobei der Schritt zum Abtasten, um mindestens eine Zwischensektion (2,4,6) zu bilden, eine Vielzahl von Zwischensektionen (2,4,6) bildet, die äquidistant zueinander sind.

13. Verfahren nach einem der vorhergehenden Ansprüche, wobei der Schritt zum Abtasten, um mindestens eine Zwischensektion (2,4,6) zu bilden, eine Vielzahl von Zwischensektionen (2,4,6) nacheinander bildet.

14. Verfahren nach einem der vorhergehenden Ansprüche, wobei eine jede Einschlusssektion (1,3,5,7) und eine jede Zwischensektion (2,4,6) entlang des jeweiligen Schmelzwegs (D, P) gebildet werden, der gemäß einer Vorschubrichtung des Laserstrahls verfolgt wird, die einer Vorschubrichtung entgegengesetzt ist, die zum Bilden der vorhergehenden Einschlusssektion (1,3,5,7) oder Zwischensektion (2,4,6) verfolgt wird.

15. Verfahren nach einem der vorhergehenden Ansprüche, umfassend die folgenden Schritte:
- Identifizieren eines Bereichs des Pulverbetts, auf dem mindestens eine Schicht, die dazu bestimmt ist, einen Randabschnitt (20) des fertigen Objekts (10) zu definieren, gebildet wird, wobei der Randabschnitt (20) eine vordefinierte Dicke des Objekts (10) einnimmt und vorzugsweise einen verbleibenden Körperabschnitt (30) desselben Objekts (10) umschreibt;
- mittels Laserabtastens, Ausführen einer Vielzahl von Einschlusssektionen (1,3,5,7) in dem dem Randabschnitt (20) entsprechenden Bereich des Pulverbetts;
- mittels Laserabtastens, Ausführen mindestens einer Zwischensektion (2,4,6) in dem dem Randabschnitt (20) entsprechenden Bereich des Pulverbetts;
- mittels Laserabtastens, Durchführen eines sogenannten selektiven Laserschmelzens zum Einfüllen in den dem Körperabschnitt (30) entsprechenden Bereich des Pulverbetts,
so dass im fertigen Objekt (10) der Randabschnitt (20) eine geringere Porosität als der Körperabschnitt (30) aufweist.

## Revendications

1. Méthode pour réaliser une fusion sélective par laser d'une poudre métallique pour fabriquer un objet (10), comprenant les étapes suivantes :
- balayer un lit de poudre métallique au moyen d'un faisceau laser configuré pour effectuer une pluralité de parcours de fusion (1,3,5,7) de manière à réaliser une pluralité de sections de confinement (1,3,5,7), chacune ayant sa propre largeur prédéfinie, lesdites sections de confinement (1,3,5,7) délimitant entre elles un espace de confinement (C) ayant une largeur prédéfinie ;
- balayer un lit de poudre métallique au moyen d'un faisceau laser configuré pour effectuer au moins un parcours de fusion (2,4,6) à l'intérieur de l'espace de confinement (C) de manière à faire fondre sélectivement la matière présente dans ledit espace de confinement (C) afin de réaliser une section intermédiaire (2,4,6) ayant une largeur prédéfinie ;
**caractérisée par** le réglage de l'intensité du faisceau laser entre au moins une première valeur d'intensité correspondant à l'étape de balayage pour réaliser une pluralité de sections de confinement (1,3,5,7) et une deuxième valeur d'intensité correspondant à l'étape de balayage pour réaliser au moins une section intermédiaire (2,4,6), dans laquelle la première valeur d'intensité correspondant à l'étape de balayage pour réaliser une pluralité de sections de confinement (1,3,5,7) est inférieure à la deuxième valeur d'intensité correspondant à l'étape de balayage pour réaliser au moins une section intermédiaire (2,4,6).

2. Méthode selon la revendication 1, dans laquelle la largeur de ladite section intermédiaire (2,4,6) est au moins égale à un quart de la largeur de l'espace de confinement (C) délimité entre deux sections de confinement (1,3,5,7) adjacentes.

3. Méthode selon la revendication 1 ou 2, dans laquelle la largeur de ladite section intermédiaire (2,4,6) est au moins égale à la moitié de la largeur de l'espace de confinement (C) délimité entre deux sections de confinement (1,3,5,7) adjacentes.

4. Méthode selon l'une quelconque des revendications précédentes, dans laquelle la largeur de ladite section intermédiaire (2,4,6) est au moins égale aux trois quarts de la largeur de l'espace de confinement (C) délimité entre deux sections de confinement (1,3,5,7) adjacentes.

5. Méthode selon l'une quelconque des revendications précédentes, dans laquelle la largeur de ladite section intermédiaire (2,4,6) est au moins égale à la largeur de l'espace de confinement (C) délimité entre deux sections de confinement (1,3,5,7) adjacentes.

6. Méthode selon l'une quelconque des revendications précédentes, dans laquelle la largeur d'une section intermédiaire (2,4,6) est supérieure à la largeur de l'espace de confinement (C) délimité entre deux sections de confinement (1,3,5,7) adjacentes, de sorte que ladite section intermédiaire (2,4,6) chevauche au moins partiellement au moins l'une desdites deux sections de confinement (1,3,5,7), de préférence les deux.

7. Méthode selon l'une quelconque des revendications précédentes, dans laquelle ladite étape de balayage pour réaliser au moins une section intermédiaire (2,4,6) comprend la sous-étape consistant à balayer la poudre métallique afin de réaliser une pluralité de sections intermédiaires (2,4,6), chacune dans un espace de confinement (C) respectif délimité entre deux sections de confinement (1,3,5,7) ou entre une section de confinement (1,3,5,7) et une section intermédiaire (2,4,6) précédemment achevée.

8. Méthode selon l'une quelconque des revendications précédentes, dans laquelle ladite pluralité de sections de confinement (1,3,5,7) et ladite au moins une section intermédiaire (2,4,6) ont la même largeur.

9. Méthode selon l'une quelconque des revendications précédentes, dans laquelle ladite pluralité de sections de confinement (1,3,5,7) et ladite au moins une section intermédiaire (2,4,6) sont parallèles l'une à l'autre.

10. Méthode selon l'une quelconque des revendications précédentes, dans laquelle chaque section de confinement (1,3,5,7) est construite à égale distance des autres.

11. Méthode selon l'une quelconque des revendications précédentes, dans laquelle ladite pluralité de sections de confinement (1,3,5,7) est réalisée en séquence.

12. Méthode selon l'une quelconque des revendications précédentes, dans laquelle l'étape de balayage pour réaliser au moins une section intermédiaire (2,4,6) réalise une pluralité de sections intermédiaires (2,4,6) qui sont équidistantes les unes des autres.

13. Méthode selon l'une quelconque des revendications précédentes, dans laquelle l'étape de balayage pour réaliser au moins une section intermédiaire (2,4,6) réalise une pluralité de sections intermédiaires (2,4,6) en séquence.

14. Méthode selon l'une quelconque des revendications précédentes, dans laquelle chaque section de confinement (1,3,5,7) et chaque section intermédiaire (2,4,6) sont réalisées le long du parcours de fusion (D, P) respectif tracé selon une direction d'avancement du faisceau laser qui est opposée à une direction d'avancement tracée pour la réalisation de la section de confinement (1,3,5,7) précédente ou de la section intermédiaire (2,4,6).

15. Méthode selon l'une quelconque des revendications précédentes, comprenant les étapes suivantes :
- identifier une zone du lit de poudre sur laquelle au moins une couche destinée à définir une partie de bord (20) de l'objet (10) fini sera réalisée, dans laquelle ladite partie de bord (20) occupe une épaisseur prédéfinie de l'objet (10) et circonscrit de préférence une partie de corps (30) restante du même objet (10) ;
- au moyen d'un balayage laser, exécuter une pluralité de sections de confinement (1,3,5,7) dans la zone du lit de poudre correspondant à la partie de bord (20) ;
- au moyen d'un balayage laser, exécuter au moins une section intermédiaire (2,4,6) dans la zone du lit de poudre correspondant à la partie de bord (20) ;
- au moyen d'un balayage laser, réaliser ladite fusion sélective par laser pour remplir la zone du lit de poudre correspondant à la partie du corps (30),
de sorte que, dans l'objet (10) fini, la partie du bord (20) possède une porosité inférieure à celle de la partie du corps (30).
